# EUROPEAN PATENT APPLICATION

(11) **EP 4 586 123 A2**
(43) Date of publication of application: **16.07.2025**
(21) Application number: 25179179.4
(22) Date of filing: 27.05.2025
(51) Int. Cl.: G06F 21/62

(54) **INTEGRATED CIRCUIT, METHOD, DEVICE, AND MEDIUM FOR CONTROLLING RESOURCE ACCESS**

(30) Priority: 30.10.2024 CN 202411533680
(71) Applicant: XG TECH PTE. LTD., Singapore 179098 (SG)
(72) Inventor: LIU, Tao, 179098 Singapore (SG); SHEN, Xinwei, 179098 Singapore (SG)
(74) Representative: Patentanwälte Magenbauer & Kollegen Partnerschaft mbB

(57) **Abstract**

Embodiments of the disclosure disclose an integrated circuit, a method for controlling resource access, a device, and a medium. A resource access request sent by a requester is received, whether the requester is permitted to access a resource party corresponding to an access address requested by the requester is determined based on access permission control information pre-configured, to obtain a first determining result. In response to that the requester is permitted to access the resource party, whether the requester is permitted to operate on the access address is determined based on security control information pre-configured and security attribute information in the resource access request, to obtain a second determining result. Moreover, the resource access request is processed based on the second determining result.

## Description

### TECHNICAL FIELD

The disclosure relates to computer technologies and security technologies, and in particular, to an integrated circuit, a method for controlling resource access, a device, and a medium.

### BACKGROUND

With development of chip technologies and autonomous driving technologies, a vehicle may be provided with increasingly rich driving related functions and intelligent cockpit functions. With constant improvement of computing power of intelligent driving chips, a plurality of operating systems (OS) may run on one chip (that is, a single chip) to centrally implement the driving related functions and the intelligent cockpit functions of the vehicle. In this way, a chip resource may be shared, and reuse efficiency of the chip and a peripheral circuit may be improved, which helps to reduce an overall chip cost for a vehicle cockpit.

Of the driving related functions of a vehicle, different functions may require different security levels. In a scenario where a plurality of operating systems run on a single chip to implement the driving related functions and the intelligent cockpit functions, different functions require different security levels. Accordingly, operating systems implementing different functions have different information security requirements.

### SUMMARY

To solve the foregoing technical problem, embodiments of the disclosure provide an integrated circuit, a method for controlling resource access, a device, and a medium.

An aspect of embodiments of the disclosure provides an integrated circuit, including a plurality of hardware modules and a resource access control device, where the plurality of hardware modules are connected to the resource access control device via a bus; at least one hardware module of the plurality of hardware modules is correspondingly allocated to at least one operating system; and
the resource access control device is configured to:
receive a resource access request sent by a requester, the resource access request including a requester identifier, security attribute information, and an access address, where the requester identifier identifies the requester initiating the resource access request, the requester is one of the at least one hardware module, and the requester is allocated to a corresponding operating system,
determine, based on access permission control information pre-configured, whether the requester is permitted to access a resource party corresponding to the access address, to obtain a first determining result, where the resource party is a hardware module of the plurality of hardware modules other than the at least one hardware module;
in response to the first determining result indicating that the requester is permitted to access the resource party, determine, based on security control information pre-configured and the security attribute information, whether the requester is permitted to operate on the access address, to obtain a second determining result; and
process the resource access request based on the second determining result.

Another aspect of embodiments of the disclosure provides a method for controlling resource access, including:
receiving a resource access request, the resource access request including a requester identifier, security attribute information, and an access address, where the requester identifier identifies a requester initiating the resource access request, and the requester is allocated to a corresponding operating system;
determining, based on access permission control information pre-configured, whether the requester is permitted to access a resource party corresponding to the access address, to obtain a first determining result;
in response to the first determining result indicating that the requester is permitted to access the resource party, determining, based on security control information pre-configured and the security attribute information, whether the requester is permitted to operate on the access address, to obtain a second determining result; and
processing the resource access request based on the second determining result.

Still another aspect of embodiments of the disclosure provides a computer readable storage medium. The storage medium stores a computer program, and when executed, the computer program implements the method according to any one embodiment of the disclosure.

Yet another aspect of embodiments of the disclosure provides a computer program product. When executed by a processor, instructions in the computer program product implement the method according to the any one embodiment.

Still yet another aspect of embodiments of the disclosure provides an electronic device, including: a processor, a memory, and a resource access control device, where
the memory is configured to store processor-executable instructions; and
the processor is configured to read the executable instructions from the memory, and execute the instructions to control the resource access control device to implement the method according to the any one embodiment.

An integrated circuit according to embodiments of the disclosure includes a plurality of hardware modules and a resource access control device. The plurality of hardware modules are connected to the resource access control device via a bus. At least one hardware module of the plurality of hardware modules is correspondingly allocated to at least one operating system. When requesting to access a resource of an access address, any one hardware module allocated to an operating system initiates a resource access request as a requester and carries security attribute information per se through the resource access request. The resource access request is sent to the resource access control device, the resource access control device determines, based on access permission control information pre-configured, whether the requester is permitted to access a resource party corresponding to the access address. In this way, requester authentication is implemented, which may restrict access of a secure world by a non-secure world, or access of a module with a high security level by a module with a low security level in the secure world, effectively ensuring security of a function requiring a high security level. If the requester is permitted to access the resource party, it is determined, based on security control information pre-configured and the security attribute information of the requester, whether the requester is permitted to operate on the access address. The resource access request is processed on this basis, thereby restricting the permission of the requester to perform an operation on the resource that the requester requests to access. On one hand, from a perspective of information security, leakage of private data may be effectively avoided; and from a perspective of function security, rewriting of important data related to a security function may be effectively avoided, thereby improving function security. On the other hand, resource competition caused by simultaneous access of one resource by operating systems with no operation permission may be avoided, thereby effectively ensuring real-time performance and security of a related function.

### BRIEF DESCRIPTION OF DRAWINGS

FIG. 1 is a schematic diagram of an illustrative application according to an embodiment of the disclosure;
FIG. 2 is a schematic diagram of a structure of an integrated circuit according to an illustrative embodiment of the disclosure;
FIG. 3 is a schematic diagram of a structure of an integrated circuit according to another illustrative embodiment of the disclosure;
FIG. 4 is a schematic diagram of access permissions for accessing a resource party or its accessible address space according to an embodiment of the disclosure;
FIG. 5 is a schematic diagram of a structure of an integrated circuit according to still another illustrative embodiment of the disclosure;
FIG. 6 is a schematic diagram of a structure of an integrated circuit according to yet another illustrative embodiment of the disclosure;
FIG. 7 is a schematic flowchart of a method for controlling resource access according to an illustrative embodiment of the disclosure;
FIG. 8 is a schematic flowchart of a method for controlling resource access according to another illustrative embodiment of the disclosure;
FIG. 9 is a schematic flowchart of a method for controlling resource access according to still another illustrative embodiment of the disclosure;
FIG. 10 is a schematic flowchart of a method for controlling resource access according to yet another illustrative embodiment of the disclosure;
FIG. 11 is a schematic flowchart of a method for controlling resource access according to still yet another illustrative embodiment of the disclosure;
FIG. 12 is a schematic flowchart of a method for controlling resource access according to a further illustrative embodiment of the disclosure; and
FIG. 13 is a schematic diagram of a structure of an electronic device according to an illustrative embodiment of the disclosure.

### DETAILED DESCRIPTION OF THE EMBODIMENTS

To explain the disclosure, illustrative embodiments of the disclosure are described below in detail with reference to accompanying drawings. Obviously, the embodiments described are merely some, rather than all of embodiments of the disclosure. It should be understood that the disclosure is not limited by the illustrative embodiments.

It should be noted that unless otherwise specified, the scope of the disclosure is not limited by relative arrangement, numeric expressions, and numerical values of components and steps described in these embodiments.

### Application overview

With development of chip technologies and autonomous driving technologies, a vehicle may be provided with increasingly rich driving related functions and intelligent cockpit functions. For example, driving related functions may include functions such as instrument display at a driving level, autonomous driving perception and control, autonomous driving decision-making and execution, etc. For example, intelligent cockpit functions may include functions such as entertainment, map navigation, etc. Of these driving related functions and intelligent cockpit functions, different functions may require different security levels. The driving related functions involve driving safety and require relatively high security levels. For example, the instrument display function and the autonomous driving perception and control function typically require an ASIL-B security level, while the autonomous driving decision-making and execution function typically requires an ASIL-D security level. However, the intelligent cockpit functions require relatively low security levels. A plurality of operating systems that satisfy the requirements may run on a single chip that implements the driving related functions and the intelligent cockpit functions (which may be referred to as a cockpit-integrated driving chip), to ensure security of the respective functions. Meanwhile, the plurality of operating systems may improve reuse efficiency of the chip and a peripheral circuit and reduce an overall chip cost for a vehicle cockpit by sharing a chip resource.

However, in a scenario where a plurality of operating systems run on a single chip to implement the driving related functions and the intelligent cockpit functions, different functions require different security levels. Accordingly, operating systems implementing different functions have different information security requirements. How to control permissions for different operating systems to access a resource in the chip, so as to ensure security of respective functions and information security, is a problem that urgently needs to be solved.

### Illustrative applications

Embodiments of the disclosure may be applied to any device that provides different functions through different applications, such as a vehicle, a mobile terminal, a server, etc. The plurality of different functions require different or not exactly the same security levels. For example, a plurality of driving related functions, such as instrument display, entertainment, map navigation, driver monitoring, assisted driving, etc., may be provided in a vehicle, and different functions may require different security levels.

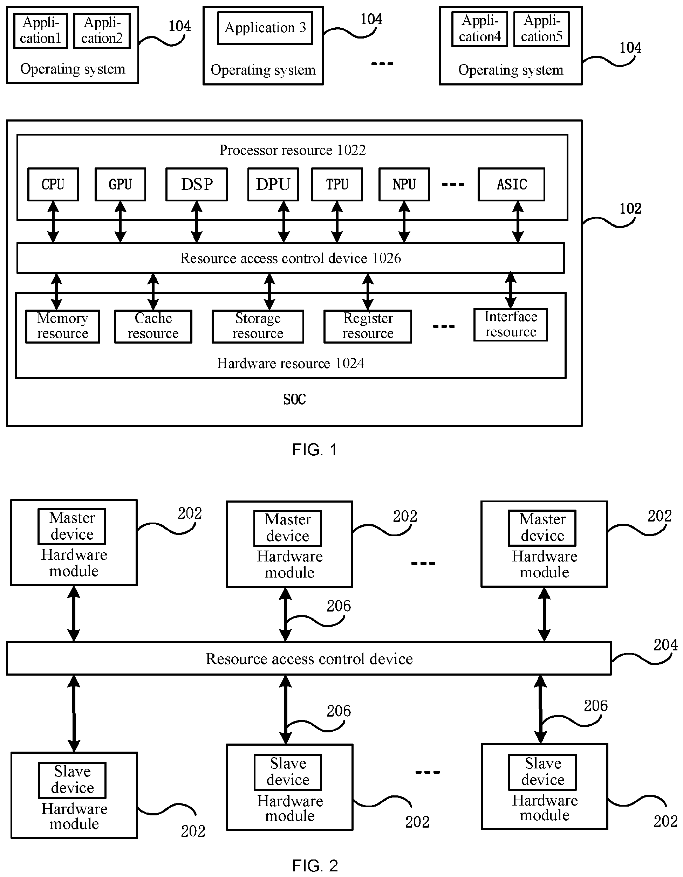

FIG. 1 is a schematic diagram of an illustrative application according to an embodiment of the disclosure. As shown in FIG. 1, taking that embodiments of the disclosure are applied to a vehicle as an example, in an electronic system of the vehicle, a heterogeneous system on chip (SOC) 102 is provided, and a plurality of operating systems 104 that can run on the SOC 102 are installed. Different operating systems may be used to implement respective driving related functions.

The SOC102 may include a processor resource 1022, a hardware resource 1024, and a resource access control device 1026.

The processor resource 1022 may include a central processing unit (CPU) and at least one type of processors as follows: a graphics processing unit (GPU), an application-specific integrated circuit (ASIC), a tensor processing unit (TPU), a deep learning processing unit (DPU), a neural processing unit (NPU), a digital signal processor (DSP), etc. In embodiments of the disclosure, according to actual requirements, the processor resource 1022 may include different types and quantities of processors, which is not limited in embodiments of the disclosure.

The hardware resource 1024 may include but is not limited to at least one of a memory resource, a cache resource, a storage resource, a register resource, an interface resource, etc. For example, the memory resource may include but is not limited to a random access memory (RAM). For example, the cache resource may include but is not limited to a cache memory. For example, the storage resource may include but is not limited to a solid-state drive (SSD), a universal flash storage (UFS), an embedded multimedia card (eMMC), a secure digital card (SD), a flash memory, etc. The interface resource refers to an input/output (I/O) interface that may be connected to an external device. In embodiments of the disclosure, according to actual requirements, the hardware resource 1024 may include different types and quantities of hardware, which is not limited in embodiments of the disclosure.

The plurality of operating systems 104 may provide running environments for upper-layer applications that implement different functions, to implement the respective functions. Each operating system may manage and schedule corresponding processor resource and hardware resource according to a task required to be processed by an upper-layer application carried thereby, to process respective tasks. Because driving related functions and intelligent cockpit functions of the vehicle require different security levels, the plurality of operating systems 104 may include a plurality of operating systems that satisfy the requirements of the respective functions for security levels, so that applications having different functions can perform well in the respective operating systems. For example, in a specific implementation example, an underlying real-time operating system (such as QNX, RTOS, or AUTOSAR) may be used to carry applications and services related to the driving related functions that require high real-time performance, high reliability, and strong security, such as instrument display, autonomous driving perception and control, and autonomous driving decision-making and execution; and Linux, Android, and other systems may be used to carry applications and services related to the intelligent cockpit functions that do not require high security, such as information and entertainment. Specific operating system types and quantities of the plurality of operating systems 104 in embodiments of the disclosure may be set according to actual requirements, which are not limited in embodiments of the disclosure.

In specific implementation, the processor resource 1022 within the SOC 102 may be partitioned and isolated through a hardware isolation technology, to obtain a plurality of masters. Alternatively, the processor resource 1022 may be partitioned through a virtualization technology or in a time-division multiplexing manner, to obtain a plurality of virtual machines (VMs). The plurality of masters and/or virtual machines may each be allocated to a corresponding operating system, and respective security attribute information may be configured for the masters and/or VMs, respectively.

The hardware resource 1024 within the SOC 102 may be partitioned through the hardware isolation technology. Alternatively, the hardware resource 1024 within the SOC 102 may be partitioned through a hardware virtualization technology (such as middleware hypervisor) during startup of the electronic system of the vehicle, so as to allocate an appropriate amount of memories, CPUs, networks, storages, and other hardware resources to the masters or the virtual machines that run various operating systems, respectively. By loading and running different operating systems 104 through various masters or virtual machines, permission isolation may be implemented for the plurality of operating systems 104, so that software and hardware corresponding to various functions implemented by the different operating systems are isolated from each other, thereby ensuring security of the driving related functions.

When one of the masters or virtual machines executes a task, this master or virtual machine may serve as a requester and initiate a resource access request, the resource access request including a requester identifier, security attribute information pre-configured for the requester, and an access address. After receiving the resource access request sent by the requester, the resource access control device 1026 determines, based on access permission control information pre-configured, whether the requester is permitted to access a resource party (resource) corresponding to the access address, to obtain a first determining result; if the first determining result indicates that the requester is permitted to access the resource party, determines, based on security control information pre-configured and the security attribute information, whether the requester is permitted to operate on the access address, to obtain a second determining result; and processes the resource access request accordingly based on the second determining result.

In this way, requester authentication is implemented, which may restrict access of a secure world by a non-secure world, or access of a module with a high security level by a module with a low security level in the secure world, effectively ensuring security of a function requiring a high security level. In addition, the permission of the requester to perform an operation on the resource that the requester requests to access is restricted. On one hand, from a perspective of information security, leakage of private data may be effectively avoided; and from a perspective of function security, rewriting of important data related to a security function may be effectively avoided, thereby improving function security (such as security of vehicle driving). On the other hand, resource competition caused by simultaneous access of one resource by operating systems with no operation permission may be avoided, thereby effectively ensuring real-time performance and security of a related function.

### Illustrative system

FIG. 2 is a schematic diagram of a structure of an integrated circuit according to an illustrative embodiment of the disclosure. This embodiment may be applied to any device, such as a mobile terminal, a server, a vehicle, etc. In embodiments of the disclosure, description is made by using an example of application to an integrated circuit in the vehicle, which may be referred to for implementation of application to other devices. As shown in FIG. 2, the integrated circuit in this embodiment includes a plurality of hardware modules 202 and a resource access control device 204. The plurality of hardware modules 202 are connected to the resource access control device 204 via a bus 206. At least one hardware module of the plurality of hardware modules 202 is correspondingly allocated to at least one operating system.

Optionally, in some implementations, the integrated circuit in embodiments of the disclosure may include, for example, a SOC or other heterogeneous multi-core chips. The hardware modules 202 in the integrated circuit may include a processor resource and a hardware resource.

The processor resource may include a CPU and any one of the following types of processors: a GPU, an ASIC, a TPU, a DPU, an NPU, and a DSP. According to actual requirements, the processor resource may include different types and quantities of processors, which is not limited in embodiments of the disclosure.

In specific implementation, the processor resource may be partitioned and isolated through a hardware isolation technology based on specific types of processors in the processor resource, to obtain a plurality of masters. Alternatively, the processor resource may be partitioned through a virtualization technology or in a time-division multiplexing manner, to obtain a plurality of virtual machines. The plurality of masters and/or virtual machines may each be allocated to a corresponding operating system. In specific implementation, if a processor such as a VPU or a BPU may be partitioned into different hardware channels through the hardware isolation technology (that is, in a hard isolated virtualization manner), the processor may be partitioned into a plurality of masters in a channel dimension. If a processor such as a DPU cannot be partitioned into different hardware channels, resource partitioning may be performed on the processor by using the virtualization technology or in the time-division multiplexing manner, to obtain a plurality of virtual machines. A plurality of masters and/or virtual machines, that is, at least one hardware module of the plurality of hardware modules 202, are obtained by partitioning and isolating (or partitioning) the processor resource in a manner.

The hardware resource may include a memory resource, a cache resource, a storage resource, a register resource, an interface resource, etc. A quantity of each type of hardware resources may be set according to actual requirements, which is not limited in embodiments of the disclosure. For example, the memory resource may include but is not limited to a random access memory. For example, the cache resource may include but is not limited to a cache memory. For example, the storage resource may include but is not limited to a solid-state drive. The register resource may include at least one register for implementing different information configuration functions. The interface resource refers to an I/O interface that may be connected to an external device. In embodiments of the disclosure, according to actual requirements, the hardware resource may include different types and quantities of hardware, which is not limited in embodiments of the disclosure.

In specific implementation, the hardware resource may be partitioned through the hardware isolation technology, or may be partitioned through a hardware virtualization technology (such as middleware hypervisor) during startup of an electronic system of the vehicle, so as to allocate an appropriate amount of memories, CPUs, networks, storages, and other hardware resources to the masters or the virtual machines that run various operating systems, respectively.

A plurality of operating systems may run on the integrated circuit, providing running environments for upper-layer applications that implement respective functions, to ensure that tasks for implementing the respective functions can be executed orderly and efficiently, thereby implementing the respective functions. Each operating system may schedule, according to a task required to be processed by an upper-layer application carried thereby, resources (including the processor resource and the hardware resource) in the integrated circuit to process respective tasks. Because driving related functions and intelligent cockpit functions of the vehicle may require different security levels, the plurality of operating systems may include operating systems that satisfy the requirements of the respective functions for security levels to be implemented, so that applications having different functions can perform well in the respective operating systems. For example, in a specific implementation example, an underlying real-time operating system may be used to carry applications and services related to the driving related functions that require high real-time performance, high reliability, and strong security, such as instrument display, autonomous driving perception and control, and autonomous driving decision-making and execution; and Linux, Android, and other systems may be used to carry applications and services related to the intelligent cockpit functions that do not require high security, such as information and entertainment. Specific types and quantities of the plurality of operating systems in embodiments of the disclosure may be set according to actual requirements, which are not limited in embodiments of the disclosure.

Each master or virtual machine, that is, each of the at least one hardware module, may serve as a master device to load and run different operating systems. In this case, permission isolation may be implemented for the plurality of operating systems, so that software and hardware corresponding to functions implemented by different operating systems are isolated from each other, application of which to the vehicle thereby ensures security of different functions. In specific implementation, middleware such as Hypervisor may be used to manage permission management software of the integrated circuit. Alternatively, after initialization is completed during a startup process of the integrated circuit, a unique device ID is configured for each master device in the integrated circuit to uniquely identify this device, and the device ID is set in that device. The device ID is obtained based on the master device through the hardware isolation technology or the virtualization technology, and may be a master identifier (MID) or a virtual machine identifier (VMID). Subsequently, each master device may be allocated to a corresponding operating system by using a configuration register, and respective security attribute information may be configured for the master device that is allocated to the corresponding operating system.

Hardware units obtained by partitioning the hardware resource may be used as slave devices.

When the master device needs to execute tasks corresponding to applications in the operating system, the master device may initiate a communication request (such as a resource access request) and control operations of the bus 206, so as to communicate and exchange data with the slave device, such as perform data reading and writing on the slave device. In this case, the master device that initiates the communication request serves as a requester, and the slave device corresponding to the communication request serves as a resource party corresponding to the communication request.

Optionally, in some implementations, the bus 206 in embodiments of the disclosure may adopt a bus of any bus standard according to actual requirements, such as data transmission requirements and hardware connection conditions. A bus standard may include but is not limited to a bus of an advanced micro-controller bus architecture (AMBA) specification, a peripheral component interface express (PCIe) bus, or a bus of any other bus standard. The bus of the AMBA specification may include but is not limited to at least one of the following buses: an advanced high-performance bus (AHB), an advanced peripheral bus (APB), an advanced extensible interface (AXI) bus, an AXI coherency extensions (ACE) bus, and an advanced system bus (ASB). A specific bus used is not limited in embodiments of the disclosure.

The resource access control device 204 is configured to:
in response to receiving a resource access request sent by a requester. The resource access request includes a requester ID, security attribute information, and an access address. The resource access request is used to request access to the access address, such as reading data from the access address and writing data to the access address. The requester is one of the at least one hardware module 202 described above, and as a master device, the requester is allocated to a corresponding operating system. The requester ID uniquely identifies the requester initiating the resource access request, and may be an MID or a VMID (denoted by MID/VMID below). Because each master device is allocated to a corresponding operating system, the corresponding operating system may be uniquely determined based on the requester ID, so as to determine the master device that initiates the resource access request and the operating system. In specific implementation, when the requester is obtained by partitioning the processor resource in the time-division multiplexing manner, since one requester may be allocated to different operating systems in the time-division multiplexing manner, the requester ID corresponds to different operating systems in different time periods.
determine, based on access permission control information pre-configured, whether the requester is permitted to access a resource party corresponding to the access address in the resource access request, to obtain a first determining result, where the resource party serves as a slave device, and is one of the plurality of hardware modules 202 except the requester;
in response to the first determining result indicating that the requester is permitted to access the resource party, determine, based on security control information pre-configured and the security attribute information in the resource access request, whether the requester is permitted to operate on the access address in the resource access request, to obtain a second determining result; and
process the resource access request based on the second determining result.

According to embodiments of the disclosure, the integrated circuit includes a plurality of hardware modules and the resource access control device, where the plurality of hardware modules are connected to the resource access control device via a bus, and at least one hardware module of the plurality of hardware modules is correspondingly allocated to at least one operating system. When requesting to access a resource of an access address, any one hardware module allocated to an operating system initiates a resource access request as a requester and carries security attribute information per se through the resource access request. The resource access request is sent to the resource access control device, the resource access control device determines, based on access permission control information pre-configured, whether the requester is permitted to access a resource party corresponding to the access address. In this way, requester authentication is implemented, which may restrict access of a secure world by a non-secure world, or access of a module with a high security level by a module with a low security level in the secure world, effectively ensuring security of a function requiring a high security level. If the requester is permitted to access the resource party, it is determined, based on security control information pre-configured and the security attribute information of the requester, whether the requester is permitted to operate on the access address. The resource access request is processed on this basis, thereby restricting the permission of the requester to perform an operation on the resource that the requester requests to access. On one hand, from a perspective of information security, leakage of private data may be effectively avoided; and from a perspective of function security, rewriting of important data related to a security function may be effectively avoided, thereby improving function security. On the other hand, resource competition caused by simultaneous access of one resource by operating systems with no operation permission may be avoided, thereby effectively ensuring real-time performance and security of a related function.

Optionally, in some implementations, the security attribute information may include but is not limited to at least one of the following: security status information and data rights management (DRM) attribute information. The security status information represents a security attribute of the requester, that is, whether the requester originates from the secure world, so as to represent whether initiating the resource access request by the requester is a secure operation or a non-secure operation. In some specific implementation examples, a specific value of the security status information may be a secure status (Sec) identifier 1 or a non-secure status (non-sec) identifier 0, denoting accordingly whether the resource access request sent by the requester is a secure operation or a non-secure operation. The DRM attribute information represents whether the requester has a DRM attribute. In some specific implementation examples, it may be preset that a specific value 1 or 0 of the DRM attribute information denotes accordingly that the requester has the DRM attribute, or does not have the DRM attribute.

According to this embodiment, the security attribute information may include the security status information and the DRM attribute information. Based on the security status information, it may be determined whether initiating the resource access request by the requester is a secure operation or a non-secure operation. Based on the DRM attribute information, it may be determined whether the requester has a data rights management attribute. The operation permission of the requester is controlled based on both the security status information and the DRM attribute information, which facilitates more accurate restriction on the operation permission of the requester, so as to improve information security and function security and avoid resource competition caused by simultaneous access of one resource by operating systems with no operation permission, thereby further improving security of related functions.

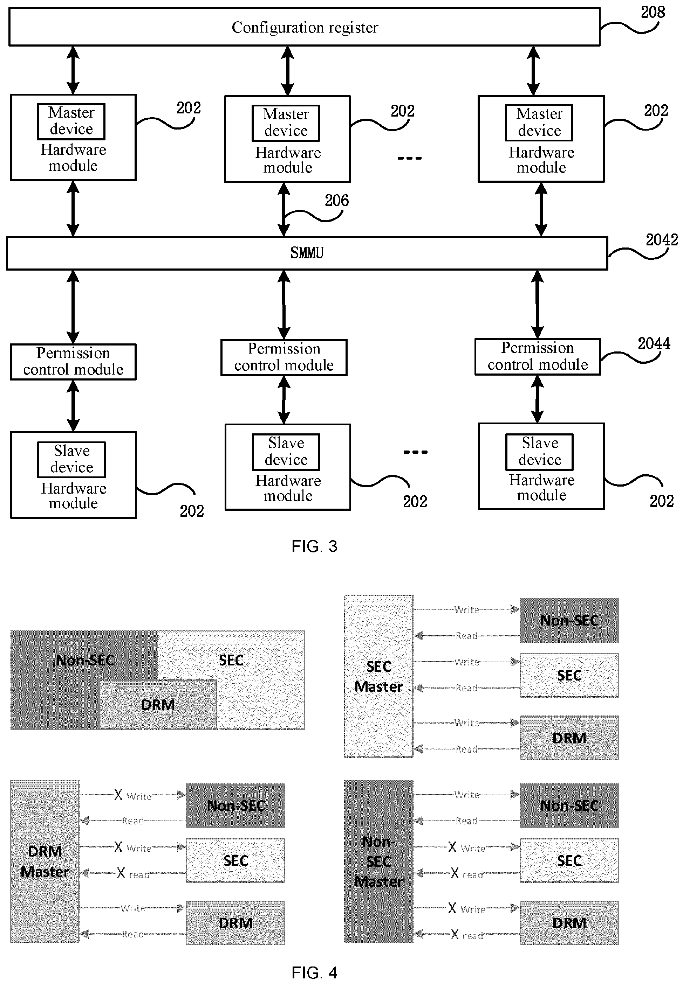

FIG. 3 is a schematic diagram of a structure of an integrated circuit according to another illustrative embodiment of the disclosure. As shown in FIG. 3, on the basis of the embodiment shown in FIG. 2, the integrated circuit in this embodiment further includes a configuration register 208, which is configured to configure security attribute information for each hardware module in the at least one hardware module 202, that is, the hardware module that serves as a master device.

Optionally, the configuration register 208 may be further configured to configure security attribute information for a hardware module in the plurality of hardware modules 202 that serves as a slave device.

In specific implementation, respective security attribute information may be configured for master devices through the configuration register 208, aiming respectively at security levels required by functions implemented by operating systems running on the master devices. The security attribute information configured for a master device includes security status information (a sec identifier/non-sec identifier) and DRM attribute information (a DRM attribute identifier/non-DRM attribute identifier). Similarly, respective security attribute information may be configured for slave devices or address spaces therein, according to resource permission control required by the slave devices. The security attribute information configured for a slave device includes security status information (a sec identifier/non-sec identifier) and DRM attribute information (a DRM attribute identifier/non-DRM attribute identifier).

According to this embodiment, after the security attribute information is configured for each master device, when the master device initiates a resource access request to the slave device, the security attribute information may be carried in the resource access request, so as to control access permission and operation permission for the resource access request, thereby improving security of information and security of related functions in the slave device.

After the security attribute information is configured for each master device, when initiating the resource access request, according to the manner of sending the resource access request and a specific bus standard adopted by the bus 206, the security attribute information of the master device may be carried through an existing signal in the bus 206; or the security attribute information of the master device may be carried through a reserved signal bit in the bus 206; or at least a part of the security attribute information may be carried through other data in the resource access request, while the other part of the security attribute information may be carried through the existing signal or the reserved signal bit in the bus 206. The specific manner of carrying the security attribute information via the bus 206 is not limited in embodiments of the disclosure.

For example, in a specific implementation, when the resource access request is transmitted between the requester and the resource party by using a bus of the AMBA specification as the bus 206, the security status information (a sec identifier 1 or a non-sec identifier 0) may be carried through a signal such as PPROT or HPROT in the bus APB or through a security status read/write signal bit (security bit) in a signal such as Axprot in the bus AXI. Alternatively, a corresponding write/read transaction may be identified to a secure type by carrying a secure stream identifier for a write/read transaction (secsid) in the bus AXI; and this write/read transaction may be identified to a non-secure type by using a non-secure stream identifier (NSID) in the bus AXI. The requester ID (MID/VMID) and the DRM attribute information (the DRM attribute identifier 1/the non-DRM attribute identifier 0) may be transmitted through signals such as NSAID and USER in the bus AXI. This is not limited in embodiments of the disclosure.

When the DRM attribute information is transmitted through the NSAID signal in the bus AXI, as the DRM attribute information identifies whether the requester has the DRM attribute, that is, identifies whether an operation corresponding to this resource access request is a DRM operation, the DRM attribute identifier 1/the non-DRM attribute identifier 0 may be carried by using 1 bit.

In the AMBA specification, USER is a customized signal, which is mainly used to transmit additional information. The USER signal includes AWUSER and ARUSER, which are respectively associated with a write address (AW) channel and a read address (AR) channel. The AWUSER is used for write operations, while the ARUSER is used for read operations. These signals may be designed to transmit any user-defined information, such as control signals, status information, or data identifiers, thereby enhancing efficiency and functionality of a transaction. In embodiments of the disclosure, the AWUSER or the ARUSER may be used to carry the DRM attribute information (the DRM attribute identifier 1/the non-DRM attribute identifier 0) according to whether an operation type of this resource access request is a read operation or a write operation. The requester ID (MID/VMID) and the DRM attribute information are transmitted through functional extension of the USER signal, so that the DRM attribute information is used for control of the operation permission later.

Optionally, in some implementations, the resource access request may also include an operation type ID, which identifies the operation type corresponding to the resource access request. The operation type corresponding to the resource access request may include a read operation (R) or a write operation (W). In some specific implementation examples, it may be preset that a specific value R or W (or 0 or 1) of the operation type ID denotes accordingly that the operation type corresponding to the resource access request is a read operation or a write operation. The operation type represented by using the operation type ID and the corresponding specific value are not limited in embodiments of the disclosure.

Optionally, referring to FIG. 3, in some implementations, the resource access control device 204 may include at least one of a system memory management unit (SMMU) 2042 and a permission control module (firewall) 2044. In other words, in the integrated circuit, only the SMMU or the permission control module may be disposed, or both the SMMU 2042 and the permission control module 2044 may be disposed, to control resource access requests from different master devices and operating systems. This is not limited in embodiments of the disclosure.

In some specific implementation examples, according to actual requirements, there may be one or more resource access control devices 204, and each SMMU 2042 is connected to at least one master device via the bus 206.

In some specific implementation examples, there may also be one or more permission control modules 2044. In specific applications, the permission control modules 2044 may be provided at the resource party that serves as the slave device, may be provided at the requester that serves as the master device, or may be independently disposed at any position between the requester and the resource party in the integrated circuit. This is not limited in embodiments of the disclosure. In specific applications, when the permission control modules 2044 are provided at slave devices, according to actual requirements, one permission control module 2044 may be disposed upstream or within each slave device, or the permission control module 2044 may be disposed upstream or within a slave device that requires the permission control module 2044 for permission control. When the permission control modules 2044 are provided at master devices, according to actual requirements, one permission control module 2044 may be disposed downstream or within each master device, or the permission control module 2044 may be disposed downstream or within a master device that requires the permission control module 2044 for permission control. A deployment mode of the permission control modules 2044 is not limited in embodiments of the disclosure.

Regarding the SMMU 2042 and the permission control module 2044, only an example of an implementation structure is exemplarily shown in FIG. 3, which may be referred to for implementation of SMMUs 2042 and permission control modules 2044 with other quantities, positions, and structures. For an implementation scheme where the resource access control device 204 only includes the SMMU 2042 and does not include the permission control module 2044, each slave device is directly connected to the SMMU 2042 via the bus.

Optionally, in some implementations, when the resource access control device 204 includes the SMMU 2042, the foregoing resource access request may include a stream identifier (stream ID, SID), the security status information, and the access address. The stream identifier includes the requester ID and the DRM attribute information in a preset format. For example, the stream ID is a MID/VMID-DRM attribute identifier. To be specific, in this implementation, the requester may carry the DRM attribute information through the stream identifier and carry the security status information separately through the security status read/write signal bit in the signal. In some specific implementation examples, when the resource access request is generated by the requester, the DRM attribute information may be written at a preset position before or after the requester ID in the stream identifier in a preset format. A specific position of the DRM attribute information in the stream identifier is not limited in embodiments of the disclosure.

Optionally, in some implementations, by using the configuration register 208, a unique stream ID may be configured for each master device that uses the SMMU for permission restriction. In other words, the MID/VMID of each master device and the DRM attribute information indicating whether the master device has the DRM attribute may be encoded according to the preset format to obtain the stream ID.

Since the integrated circuit includes a plurality of master devices, each SMMU may be connected to the plurality of master devices via a bus. Each device uniquely corresponds to a MID/VMID, thus uniquely corresponding to a stream ID. Based on this stream ID, the SMMU may distinguish between the plurality of master devices to which the SMMU is connected. In this implementation, different operating systems and tasks thereof for implementing the respective functions may be distinguished through the MID/VMID in the stream ID. DRM attributes of the master devices may be distinguished based on the DRM attribute information in the stream ID.

In this embodiment, by extending the stream ID, the requester ID and the DRM attribute information are written into the stream ID, and transmission of the requester ID and the DRM attribute information is implemented by carrying the requester ID and the DRM attribute information in the stream ID. The SMMU may obtain the requester ID and the DRM attribute information from the stream identifier, so as to perform access permission control on the requester.

Accordingly, in this embodiment, the SMMU 2042 is further configured to: obtain the stream identifier, the security status information, and the access address from the resource access request; and obtain the requester ID and the DRM attribute information from the stream identifier based on the preset format.

Optionally, in some implementations, the access permission control information may include a page table configured for each requester in at least one requester in the SMMU. To be specific, the SMMU is pre-allocated to a page table corresponding to each master device, where each page table includes at least one accessible address space and access permission attribute information of each accessible address space of the at least one accessible address space. Each accessible address space includes at least one access address, and the access permission attribute information represents current operation permission restriction information. For example, in some specific implementation examples, the access permission attribute information may include but is not limited to at least one of the following: readable, writable, unreadable, unwritable, secure and accessible, secure but inaccessible, insecure but accessible, insecure and inaccessible, DRM attribute accessible, and non-DRM attribute and inaccessible. This is not limited in embodiments of the disclosure. In specific applications, when a master device serves as the requester and accesses a slave device that serves as the resource party, if the slave device does not allow access from the master device, an accessible address space corresponding to the slave device is not included in the page table corresponding to the master device. If the master device is allowed to access the slave device but operation permission of the master device for different accessible address spaces in the slave device is restricted, respective access permission attribute information, such as unreadable, unwritable, etc., may be set for the accessible address spaces. If the master device is allowed to access the slave device but an access address requested for access by the master device is currently inaccessible (for example, is being accessed by other master devices or operating systems), respective access permission attribute information, such as unreadable, unwritable, etc., may be set for the accessible address spaces.

Optionally, in some implementations, according to security requirements of relevant functions and information protection, an access permission attribute of each accessible address space may be determined based on the security attribute information of the resource party corresponding to each accessible address space, or may be further determined in combination with a current status of the corresponding resource party. For example, as shown in FIG. 4, in a specific example, the access permission attribute of the resource party or the accessible address space of the resource party is as follows.

When the security status information of the resource party or the accessible address space of the resource party is the sec identifier, the access permission attribute of the accessible address space is secure and accessible (including secure and readable, and secure and writable), insecure and inaccessible (including insecure and unreadable and insecure and unwritable), or DRM attribute inaccessible (including DRM attribute unreadable and DRM attribute unwritable). This denotes that: the accessible address space can be accessed (data reading and writing may be performed on this accessible address space) only when the security status information in the resource access request is the sec identifier (denoting that the master device is from the secure world or this operation is a secure operation). The accessible address space cannot be accessed (data reading and writing cannot be performed on this accessible address space) when the security status information is the non-sec identifier (denoting that the master device is from the non-secure world or the current operation is a non-secure operation) and the DRM attribute information is the DRM attribute (denoting that the master device has the DRM attribute or the current operation is a DRM attribute operation).

When the security status information of the resource party or the accessible address space of the resource party is the non-sec identifier, the access permission attribute of the accessible address space is secure and accessible (including secure and readable and secure and writable), insecure but accessible (including insecure but readable and insecure but writable), DRM attribute readable, or DRM attribute unwritable. This denotes that: the accessible address space can be accessed when the security status information in the resource access request is either the sec identifier or the non-sec identifier. When the DRM attribute information is the DRM attribute, data reading can be performed on the accessible address space, but data writing cannot be performed on the accessible address space.

When the DRM attribute information of the resource party or the accessible address space of the resource party is the DRM attribute, the access permission attribute of the accessible address space is secure and accessible (including secure and readable and secure and writable), insecure and inaccessible (including insecure but readable and insecure and unwritable), or DRM attribute accessible (including DRM attribute readable and DRM attribute writable). This denotes that: the accessible address space can be accessed when the security status information in the resource access request is the sec identifier; the accessible address space cannot be accessed when the security status information is the non-sec identifier; and the accessible address space can be accessed when the DRM attribute information is the DRM attribute.

When both the security status information and the DRM attribute information are carried in the resource access request, and/or when the resource party has both the security status information and the DRM attribute information, the access permission attribute of each accessible address space of the resource party may be determined according to a preset rule. For example, it may be set that an accessible address space is determined to be accessible only when it is determined in all determining modes that this accessible address space is accessible, or an accessible address space is determined to be inaccessible only when it is determined in all determining modes that this accessible address space is inaccessible.

In addition, the SMMU may combine the current status of the resource party to set the access permission attribute of each accessible address space to inaccessible when a certain accessible address space is being accessed by other master devices, thereby avoiding problems in resource competition and resource consistency that are caused by different master devices accessing a same resource. Thus, through dynamic setting of the access permission control information by the SMMU, hardware resources in the integrated circuit can be accurately and effectively controlled, thereby improving security and resource utilization of the entire system.

In specific implementation, a stream table entry (STE) may be used to record a page table identifier corresponding to each master device identifier, and the page table configured in the SMMU may be associated with the master device identifier (the MID/VMID). In the SMMU, each master device is allocated to a page table that only includes an accessible address space that is allowed to be accessed by this master device. In this way, each master device can only index the page table that can be accessed thereby, and cannot access page tables to which other master devices or operating systems belong.

Accordingly, in this embodiment, the SMMU 2042 is further configured to:
obtain the operation type ID from the resource access request, where the operation type ID identifies that the operation type corresponding to the resource access request is a read operation or a write operation;
obtain a first page table corresponding to the requester ID, where the first page table is a page table that the requester is permitted to access, and the first page table includes at least one accessible address space corresponding to at least one resource party and the access permission attribute information of each accessible address space of the at least one accessible address space;
determine whether the requester is permitted to access the resource party based on whether the access address in the resource access request belongs to the at least one accessible address space in the first page table, to obtain the first determining result. Specifically, if the access address in the resource access request belongs to the at least one accessible address space in the first page table, it may be determined that the requester is permitted to access that access address, and a page table entry corresponding to that access address may be indexed. Otherwise, if the access address in the resource access request does not belong to the at least one accessible address space in the first page table, it may be determined that the requester is not permitted to access that access address, and is not allowed to index the page table entry corresponding to that access address.
in response to the first determining result indicating that the access address in the resource access request belongs to at least one accessible address space in the security control information, determine that the requester is permitted to access the access address, and obtain, from the security control information, access permission attribute information of a target accessible address space to which the access address belongs. The security control information may include the access permission attribute information of the foregoing at least one accessible address space. The target accessible address space refers to an accessible address space in the security control information that includes the access address in the resource access request.
determine, based on the access permission attribute information of the target accessible address space, the operation type ID in the resource access request, and one of the DRM attribute information and the security status information in the resource access request, whether the requester is permitted to perform an operation of the operation type identified by the operation type ID on the access address, that is, whether the requester is permitted to perform a read or write operation requested thereby on the access address, to obtain the second determining result; and
in response to the second determining result indicating that the requester is permitted to perform the operation of the operation type identified by the operation type ID on the access address in the resource access request, convert the access address from a virtual address (VA) to a physical address (PA) based on the first page table, and forward the resource access request to the physical address to perform an operation requested by the resource access request at the physical address, that is, to perform a respective data reading operation or data writing operation on the access address.

Each page table in the SMMU includes at least one page table entry (PTE), and each PTE denotes a mapping rule between a virtual page and a physical page (a smallest unit for mapping from the VAto the PA). When the requester is permitted to perform the operation of the operation type identified by the operation type ID on the access address in the resource access request, the SMMU 2042 may determine an actual PA to which the access address VA is mapped by searching for the PTE in the first page table corresponding to the requester; and then, forward the resource access request to the PA.

Optionally, the SMMU 2042 may be further configured to: in response to the first determining result indicating that the access address in the resource access request does not belong to the at least one accessible address space in the security control information, determine that the requester is not permitted to access the access address; or reject the resource access request in response to the second determining result indicating that the requester is not permitted to perform the operation of the operation type identified by the operation type ID on the access address in the resource access request. An error message (response err) may be responded to the requester regarding the resource access request, and/or all-zero data may be returned if the operation type identified by the operation type ID is a read operation. If the operation type identified by the operation type ID is a write operation, data that is requested to be written into the access address carried in the resource access request is discarded.

According to this embodiment, the SMMU may obtain the requester ID from the stream identifier and index the corresponding first page table according to the requester ID, so as to prevent the requester from accessing page tables to which other master devices or operating systems belong, that is, prevent the requester from accessing address spaces allocated to other master devices or operating systems (that is, hardware resources allocated to other master devices or operating systems). In this way, the access from the non-secure world to the secure world, or access from a device with a lower security level to a hardware resource with a higher security level in the secure world may be restricted, which helps to ensure requirements of different functions for function security levels. When the requester is permitted to access the access address requested thereby, the operation permission of the requester for the access address requested for access thereby is determined. In this way, the requester may be prevented from performing unauthorized data read and write operations on the access address requested for access thereby, thereby avoiding problems in information security, and problems in function security of other master devices or operating systems that are caused by data leakage or rewriting, thereby helping to improve security and reliability of the entire system.

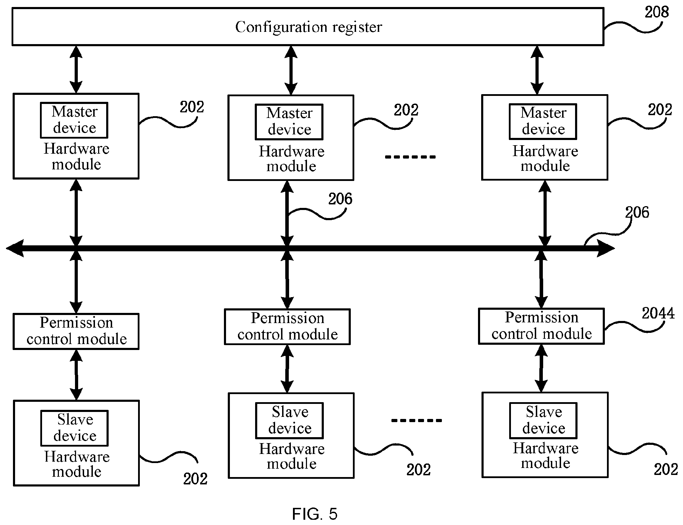

FIG. 5 is a schematic diagram of a structure of an integrated circuit according to still another illustrative embodiment of the disclosure. As shown in FIG. 5, on the basis of any one of the embodiments shown in FIG. 2 and FIG. 3, the resource access control device 204 includes the permission control module 2044. When the permission control module 2044 is provided at the resource party, the access permission control information may include a list of requesters that are permitted to access the resource party. The list of requesters may be pre-configured by using the configuration register, and may include at least one master device ID, each of which uniquely identifies a master device that can be used as a requester.

In this implementation, the security status information (the sec identifier 1 or the non-sec identifier 0) may be carried through the signal such as the PPROT or the HPROT in the bus APB or through the security status read/write signal bit in the signal such as the Axprot in the bus AXI. Alternatively, the corresponding write/read transaction may be identified to the secure type by carrying the secsid identifier for a write/read transaction in the bus AXI; and this write/read transaction may be identified to the non-secure type by using the NSID identifier in the bus AXI. The requester ID (the MID/VMID) and the DRM attribute information (the DRM attribute identifier 1/the non-DRM attribute identifier 0) may be transmitted through the signals such as the NSAID and the USER in the bus AXI. This is not limited in embodiments of the disclosure.

Accordingly, in this embodiment, the permission control module 2044 is further configured to:
obtain the requester ID, the security status information, the DRM attribute information, a resource party ID, the operation type ID, and the access address respectively from the resource access request. The resource party ID identifies the resource party requested to be accessed by the resource access request, and the operation type ID identifies that the operation type corresponding to the resource access request is a read operation or a write operation.
determine, based on whether the list of requesters in the access permission control information that are permitted to access the resource party includes the requester ID, whether the requester is permitted to access the resource party, to obtain the first determining result. Specifically, if the list of requesters includes the requester ID, it may be determined that the requester is permitted to access the resource party, and the resource access request may be allowed to enter the resource party. Otherwise, if the list of requesters does not include the requester ID, it may be determined that the requester is not permitted to access the resource party, and the resource access request is not allowed to enter the resource party.
in response to the first determining result indicating that the list of requesters includes the requester ID, determine that the requester is permitted to access the resource party, and obtain the access permission attribute information of the target accessible address space to which the access address in the resource access request belongs in the security control information. In this embodiment, the security control information includes access permission attribute information of the at least one accessible address space. Each accessible address space includes at least one access address, separately. The target accessible address space refers to an accessible address space in the security control information that includes the access address in the resource access request. In the security control information, the access permission attribute information of each accessible address space of the at least one accessible address space may be determined based on the security attribute information of the corresponding resource party, or may be further determined in combination with a current status of the accessible address space. For details, please refer to the description in the embodiment shown in FIG. 4 that is described above, and details are not described herein.
determine, based on the access permission attribute information of the target accessible address space, the operation type ID in the resource access request, and one of the DRM attribute information and the security status information in the resource access request, whether the requester is permitted to perform the operation of the operation type identified by the operation type ID on the access address, to obtain the second determining result; and
in response to the second determining result indicating that the requester is permitted to perform the operation of the operation type identified by the operation type ID on the access address, forward the resource access request to the access address in the resource access request to perform the operation requested by the resource access request on the access address, that is, to perform the respective data reading operation or data writing operation on the access address.

Optionally, the permission control module 2044 may be further configured to: in response to the first determining result indicating that the list of requesters does not include the requester ID, determine that the requester is not permitted to access the resource party; or reject the resource access request in response to the second determining result indicating that the requester is not permitted to perform the operation of the operation type identified by the operation type ID on the access address. An error message (response err) may be responded to the requester regarding the resource access request, and/or all-zero data may be returned if the operation type identified by the operation type ID is a read operation. If the operation type identified by the operation type ID is a write operation, data that is requested to be written into the access address carried in the resource access request is discarded.

According to this embodiment, the permission control module may determine, based on the pre-configured list of requesters, whether the requester is permitted to access the resource party, so as to prevent the requester from accessing hardware resources configured for other master devices or operating systems. In this way, the access from the non-secure world to the secure world, or access from a device with a lower security level to a hardware resource with a higher security level in the secure world may be restricted, which helps to ensure requirements of different functions for function security levels. When the requester is permitted to access the access address requested thereby, the operation permission of the requester for the access address is determined. In this way, the requester may be prevented from performing unauthorized data read and write operations on the access address requested for access thereby, thereby avoiding problems in information security, and problems in function security of other master devices or operating systems that are caused by data leakage or rewriting, thereby helping to improve security and reliability of the entire system.

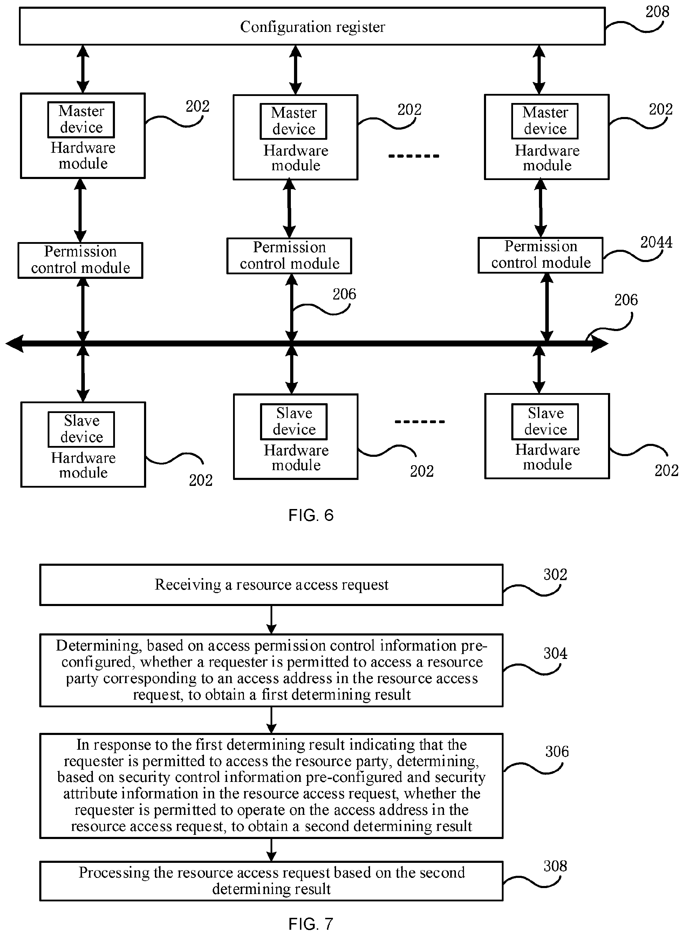

FIG. 6 is a schematic diagram of a structure of an integrated circuit according to yet another illustrative embodiment of the disclosure. As shown in FIG. 6, on the basis of any one of the embodiments shown in FIG. 2 and FIG. 3, the resource access control device 204 includes the permission control module 2044. When the permission control module 2044 is provided at the requester, the access permission control information may include a list of resource parties that the requester is permitted to access. The list of resource parties may be pre-configured by using the configuration register, and may include at least one slave device ID, each of which uniquely identifies a slave device that can be used as a resource party.

In this implementation, the security status information (the sec identifier 1 or the non-sec identifier 0) may be carried through the signal such as the PPROT or the HPROT in the bus APB or through the security status read/write signal bit in the signal such as the Axprot in the bus AXI. Alternatively, the corresponding write/read transaction may be identified to the secure type by carrying the secsid identifier for a write/read transaction in the bus AXI; and this write/read transaction may be identified to the non-secure type by using the NSID identifier in the bus AXI. The requester ID (the MID/VMID) and the DRM attribute information (the DRM attribute identifier 1/the non-DRM attribute identifier 0) may be transmitted through the signals such as the NSAID and the USER in the bus AXI. This is not limited in embodiments of the disclosure.

Accordingly, in this embodiment, the permission control module 2044 is further configured to:
obtain the requester ID, the security status information, the DRM attribute information, a resource party ID, the access address, and the operation type ID respectively from the resource access request. The resource party ID identifies the resource party requested to be accessed by the resource access request, and the operation type ID identifies that the operation type corresponding to the resource access request is a read operation or a write operation.
determine, based on whether the pre-configured list of resource parties includes the resource party ID in the resource access request, whether the requester is permitted to access the resource party, to obtain the first determining result. Specifically, if the list of resource parties includes the resource party ID in the resource access request, it is determined that the requester is permitted to access the resource party, and the resource access request may be allowed to enter the resource party. Otherwise, if the list of resource parties does not include the resource party ID in the resource access request, it is determined that the requester is not permitted to access the resource party, and the resource access request is not allowed to enter the resource party.
in response to the first determining result indicating that the list of resource parties includes the resource party ID, determine that the requester is permitted to access the resource party, and obtain the access permission attribute information of the target accessible address space to which the access address in the resource access request belongs in the security control information pre-configured. The security control information may include access permission attribute information of at least one accessible address space corresponding to each resource party ID in the list of resource parties. The access permission attribute information may include an operation permission attribute and the DRM attribute. The target accessible address space refers to an accessible address space in the security control information that includes the access address in the resource access request. In the security control information, the access permission attribute information of each accessible address space of the at least one accessible address space may be determined based on the security attribute information of the corresponding resource party, or may be further determined in combination with a current status of the accessible address space. For details, please refer to the description in the embodiments described above, and details are not described herein.
determine, based on the access permission attribute information of the target accessible address space, the operation type ID in the resource access request, and one of the DRM attribute information and the security status information in the resource access request, whether the requester is permitted to perform the operation of the operation type identified by the operation type ID on the access address, to obtain the second determining result; and
in response to the second determining result indicating that the requester is permitted to perform the operation of the operation type identified by the operation type ID on the access address, forward the resource access request to the access address in the resource access request to perform the operation requested by the resource access request on the access address.

Optionally, the permission control module 2044 may be further configured to: in response to the first determining result indicating that the list of resource parties does not include the resource party ID in the resource access request, determine that the requester is not permitted to access the resource party; or reject the resource access request in response to the second determining result indicating that the requester is not permitted to perform the operation of the operation type identified by the operation type ID on the access address. An error message (response err) may be responded to the requester regarding the resource access request, and/or all-zero data may be returned if the operation type identified by the operation type ID is a read operation. If the operation type identified by the operation type ID is a write operation, data that is requested to be written into the access address carried in the resource access request is discarded.

According to this embodiment, the permission control module may determine, based on the pre-configured list of resource parties, whether the requester is permitted to access the resource party, so as to prevent the requester from accessing hardware resources configured for other master devices or operating systems. In this way, the access from the non-secure world to the secure world, or access from a device with a lower security level to a hardware resource with a higher security level in the secure world may be restricted, which helps to ensure requirements of different functions for function security levels. When the requester is permitted to access the access address requested thereby, the operation permission of the requester for the access address is determined. In this way, the requester may be prevented from performing unauthorized data read and write operations on the access address requested for access thereby, thereby avoiding problems in information security, and problems in function security of other master devices or operating systems that are caused by data leakage or rewriting, thereby helping to improve security and reliability of the entire system.

It should be noted that when the resource access control device 204 includes both the SMMU 2042 and the permission control module 2044, according to actual requirements, the master device that performs permission control by using the SMMU 2042 (in this case, the stream identifier and the DRM attribute information are configured in the master device), and the master device that performs permission control by using the permission control module (in this case, the master device identifier, the security status information, and the DRM attribute information are configured in the master device) or the slave device may be configured by using the configuration register 208. Alternatively, it is configured that all master devices perform permission control by using the SMMU 2042 or the permission control module 2044. In practical applications, this may be dynamically configured according to requirements, and is not limited in embodiments of the disclosure. When the resource access control device 204 includes both the SMMU 2042 and the permission control module 2044, if one of the SMMU 2042 and the permission control module 2044 is used for permission control, bypassing may be performed on the other one of the SMMU 2042 and the permission control module 2044. In other words, the other one of the SMMU 2042 and the permission control module 2044 may be bypassed.

In some implementations, in case the bus 206 is a PCIe bus, the virtualization technology may be used to configure a master (a hardware path) connected to the PCle bus as a plurality of virtual machines, so that a plurality of stream identifiers may be configured for the plurality of virtual machines, and resource access requests of the plurality of virtual machines may be controlled by using the SMMU 2042; and in case the bus 206 is an AMBA bus, the resource access request of each master or virtual machine may be controlled by using the SMMU 2042 or the permission control module 2044. This is not limited in embodiments of the disclosure.

### Illustrative method

FIG. 7 is a schematic flowchart of a method for controlling resource access according to an illustrative embodiment of the disclosure. This embodiment may be applied to any device provided with a chip, such as a mobile terminal, a server, or a vehicle; and may specifically be applied to an integrated circuit in this device. In embodiments of the disclosure, description is made by using an example of application to an integrated circuit in the vehicle, which may be referred to for implementation of application to other devices. As shown in FIG. 7, the method for controlling resource access in this embodiment includes the following operations.

302: Receiving a resource access request sent by a requester, where the resource access request includes a requester ID, security attribute information, and an access address.

The resource access request is used to request access to the access address, such as reading data from the access address or writing data to the access address. The requester ID identifies a requester initiating the resource access request, where the requester is allocated to a corresponding OS.

Optionally, in some implementations, the integrated circuit in embodiments of the disclosure may include, for example, a SOC or other heterogeneous multi-core chips. In some implementations, the integrated circuit may include a processor resource and a hardware resource. The processor resource may include a CPU and any one of the following types of processors: a GPU, an ASIC, a TPU, a DPU, an NPU, and a DSP. According to actual requirements, the processor resource may include different types and quantities of processors, which is not limited in embodiments of the disclosure.

In specific implementation, the processor resource may be partitioned and isolated based on specific types of processors in the processor resource through a hardware isolation technology, to obtain a plurality of masters. Alternatively, the processor resource may be partitioned and isolated through a virtualization technology or in a time-division multiplexing manner, to obtain a plurality of virtual machines. The plurality of masters and/or virtual machines may each be allocated to a corresponding operating system.

The hardware resource may include but is not limited to at least one of: a memory resource, a cache resource, a storage resource, a register resource, an interface resource, etc. A quantity of each type of hardware resources may be set according to actual requirements, which is not limited in embodiments of the disclosure. In specific implementation, the hardware resource may be partitioned through the hardware isolation technology, or may be partitioned through a hardware virtualization technology during startup of an electronic system of the vehicle, so as to allocate an appropriate amount of memories, CPUs, networks, storages, and other hardware resources to the masters or the virtual machines that run various operating systems, respectively.

A plurality of operating systems may run on the integrated circuit, providing running environments for upper-layer applications that implement respective functions, to ensure that tasks for implementing the respective functions can be executed orderly and efficiently, thereby implementing the respective functions.

Each master or virtual machine, that is, each of at least one hardware module, may serve as a master device to load and run different operating systems. In this case, permission isolation may be implemented for the plurality of operating systems, so that software and hardware corresponding to functions implemented by the different operating systems are isolated from each other, thereby ensuring security of related functions when this embodiment is applied to the vehicle. In specific implementation, middleware such as Hypervisor may be used to manage permission management software of the integrated circuit. Alternatively, after initialization is completed during a startup process of the integrated circuit, a unique device ID is configured for each master device in the integrated circuit to uniquely identify this device, and the device ID is set in that device. The device ID is obtained based on the master device through the hardware isolation technology or the virtualization technology, and may be a master identifier or a virtual machine identifier. Subsequently, each master device may be allocated to a corresponding operating system by using a configuration register, and respective security attribute information may be configured for the master device that is allocated to the corresponding operating system.

Hardware units obtained by partitioning the hardware resource may be used as slave devices.

When the master device needs to execute tasks corresponding to applications in the operating system, the master device may initiate a communication request (such as a resource access request) and control an operation of the bus, so as to communicate and exchange data with the slave device, such as perform data reading and writing on the slave device. In this case, the master device that initiates the communication request serve as a requester, and the slave device corresponding to the communication request serve as a resource party corresponding to the communication request.

The requester ID may be an MID or a VMID (denoted by MID/VMID below). Because each master device is allocated to a corresponding operating system, the corresponding operating system may be uniquely determined based on the requester ID, so as to determine the master device that initiates the resource access request and the operating system.

304: Determining, based on access permission control information pre-configured, whether the requester is permitted to access a resource party corresponding to the access address in the resource access request, to obtain a first determining result.

306: In response to the first determining result indicating that the requester is permitted to access the resource party, determining, based on security control information pre-configured and the security attribute information in the resource access request, whether the requester is permitted to operate on the access address in the resource access request, to obtain a second determining result.

308: Processing the resource access request based on the second determining result.

In embodiments of the disclosure, requester authentication is implemented, which may restrict access of a secure world by a non-secure world, or access of a module with a high security level by a module with a low security level in the secure world, effectively ensuring security of a function requiring a high security level. If the requester is permitted to access the resource party, it is determined, based on security control information pre-configured and the security attribute information of the requester, whether the requester is permitted to operate on the access address. The resource access request is processed on this basis, thereby restricting the permission of the requester to perform an operation on the resource that the requester requests to access. On one hand, from a perspective of information security, leakage of private data may be effectively avoided; and from a perspective of function security, rewriting of important data related to a security function may be effectively avoided, thereby improving function security. On the other hand, resource competition caused by simultaneous access of one resource by operating systems with no operation permission may be avoided, thereby effectively ensuring real-time performance and security of a related function.

Optionally, in some implementations, in the method for controlling resource access according to any embodiment of the disclosure, the resource access request may also include an operation type ID, which identifies an operation type corresponding to the resource access request. The operation type corresponding to the resource access request may include a read operation (R) or a write operation (W). In some specific implementation examples, it may be preset that a specific value R or W (or 0 or 1) of the operation type ID denotes accordingly that the operation type corresponding to the resource access request is read or write. The operation type represented by using the operation type ID and the corresponding specific value are not limited in embodiments of the disclosure.

Optionally, in some implementations, the security attribute information may include but is not limited to at least one of the following: security status information and DRM attribute information. The security status information represents a security attribute of the requester, that is, whether the requester originates from the secure world, so as to represent whether initiating the resource access request by the requester is a secure operation or a non-secure operation. In some specific implementation examples, a specific value of the security status information may be a secure status (Sec) identifier 1 or a non-secure status (non-sec) identifier 0, denoting accordingly whether the resource access request sent by the requester is a secure operation or a non-secure operation. The DRM attribute information represents whether the requester has a DRM attribute. In some specific implementation examples, it may be preset that a specific value 1 or 0 of the DRM attribute information denotes accordingly that the requester has the DRM attribute, or does not have the DRM attribute.

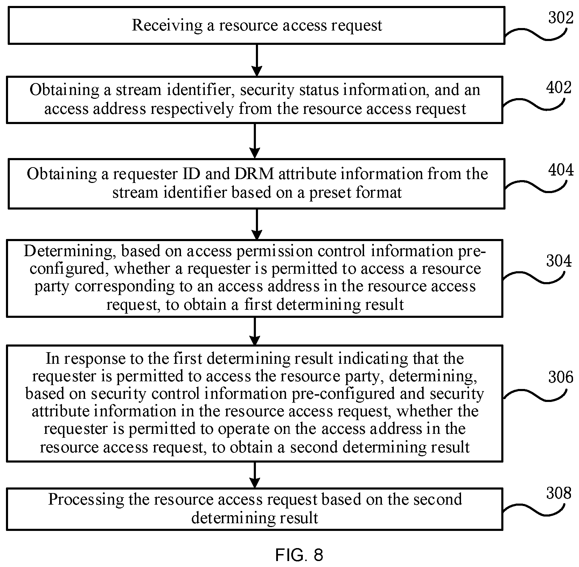

FIG. 8 is a schematic flowchart of a method for controlling resource access according to another illustrative embodiment of the disclosure. In some implementations, the method for controlling resource access may be applied to a SMMU. In other words, a SMMU may be disposed in the integrated circuit to implement embodiments of the method for controlling resource access. In this implementation, the resource access request may include a stream identifier, the security status information, and the access address. The stream identifier includes the requester ID and the DRM attribute information in a preset format. To be specific, in this implementation, the DRM attribute information is carried in the stream identifier. In some specific implementation examples, the DRM attribute information may be written at a preset position before or after the requester ID in the stream identifier in a preset format. A specific position of the DRM attribute information in the stream identifier is not limited in embodiments of the disclosure.

As shown in FIG. 8, on the basis of the embodiment shown in FIG. 7, after step 302, this embodiment further includes the following operations.

402: Obtaining a stream identifier, the security status information, and the access address respectively from the resource access request.

404: Obtaining the requester ID and DRM attribute information from the stream identifier based on a preset format.

According to this embodiment, by extending the stream ID, the requester ID and the DRM attribute information are written into the stream ID, and transmission of the requester ID and the DRM attribute information is implemented by carrying the requester ID and the DRM attribute information in the stream ID. The SMMU may obtain the requester ID and the DRM attribute information from the stream identifier, so as to perform access permission control on the requester.

Optionally, in some implementations, the access permission control information may include a page table configured for all requesters in at least one requester in the SUMM. Each page table includes at least one accessible address space and access permission attribute information of each accessible address space of the at least one accessible address space. The access permission attribute information represents current operation permission restriction information. For example, in some specific implementation examples, the access permission attribute information may include but is not limited to at least one of the following: readable, writable, unreadable, unwritable, secure and accessible, secure but inaccessible, insecure but accessible, insecure and inaccessible, DRM attribute accessible, and non-DRM attribute and inaccessible. This is not limited in embodiments of the disclosure. In specific applications, when a master device serves as the requester and accesses a slave device that serves as the resource party, if the slave device does not allow access from the master device, an accessible address space corresponding to the slave device is not included in the page table corresponding to the master device. If the master device is allowed to access the slave device but operation permission of the master device for different accessible address spaces in the slave device is restricted, respective access permission attribute information, such as unreadable, unwritable, etc., may be set for the accessible address spaces. If the master device is allowed to access the slave device but an access address requested for access by the master device is currently inaccessible (for example, is being accessed by other master devices or operating systems), respective access permission attribute information, such as unreadable, unwritable, etc., may be set for the accessible address spaces.

Optionally, in some implementations, according to security requirements of relevant functions and information protection, an access permission attribute of each accessible address space may be determined based on the security attribute information of the resource party corresponding to each accessible address space, or may be further determined in combination with a current status of the corresponding resource party. For details, please refer to the relevant description in the foregoing embodiment, and details are not described herein.

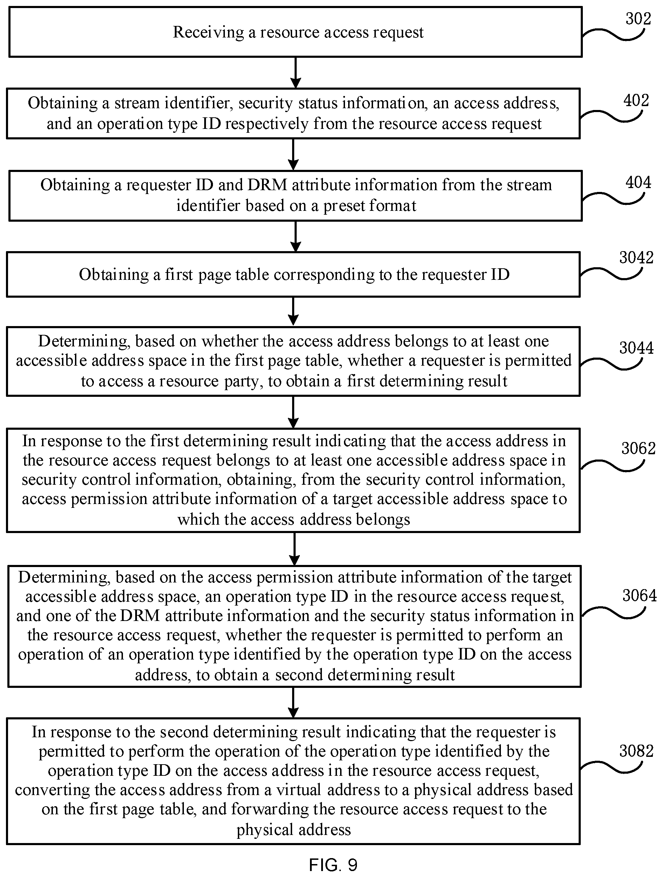

FIG. 9 is a schematic flowchart of a method for controlling resource access according to still another illustrative embodiment of the disclosure. As shown in FIG. 9, on the basis of the embodiment shown in FIG. 8, in this embodiment, operation 402 may further include obtaining the operation type ID from the resource access request. The operation type ID identifies the operation type corresponding to the resource access request.

Accordingly, in this embodiment, operation 304 may specifically include the following operations.

3042: Obtaining a first page table corresponding to the requester ID, where the first page table is a page table that the requester is permitted to access.

The first page table includes at least one accessible address space corresponding to at least one resource party and the access permission attribute information of each accessible address space of the at least one accessible address space.

3044: Determining, based on whether the access address belongs to the at least one accessible address space in the first page table, whether the requester is permitted to access the resource party, to obtain the first determining result.

In some implementations of this embodiment, the security control information may include access permission attribute information of the at least one accessible address space.

Accordingly, referring to FIG. 9, in this embodiment, operation 306 may specifically include the following operations.

3062: In response to the first determining result indicating that the access address in the resource access request belongs to at least one accessible address space in the security control information, determining that the requester is permitted to access the access address, and obtaining, from the security control information, the access permission attribute information of a target accessible address space to which the access address belongs.

The target accessible address space refers to an accessible address space in the security control information that includes the access address in the resource access request.

Specifically, if the access address in the resource access request belongs to the at least one accessible address space in the first page table, it may be determined that the requester is permitted to access that access address, and a page table entry corresponding to that access address may be indexed. Otherwise, if the access address in the resource access request does not belong to the at least one accessible address space in the first page table, it may be determined that the requester is not permitted to access that access address, and is not allowed to index the page table entry corresponding to that access address.

3064: Determining, based on the access permission attribute information of the target accessible address space, the operation type ID in the resource access request, and one of the DRM attribute information and the security status information in the resource access request, whether the requester is permitted to perform an operation of the operation type identified by the operation type ID on the access address, that is, whether the requester is permitted to perform a read or write operation requested thereby on the access address, to obtain the second determining result.

Optionally, referring to FIG. 9 again, in some implementations, on the basis of the embodiment shown in FIG. 8, operation 308 may specifically include the following operation.

3082: In response to the second determining result indicating that the requester is permitted to perform the operation of the operation type identified by the operation type ID on the access address in the resource access request, converting the access address from a virtual address to a physical address based on the first page table, and forwarding the resource access request to the physical address to perform an operation requested by the resource access request at the physical address.

Optionally, on the basis of the embodiment shown in FIG. 9, operation 308 may further include the following operations:
in response to the first determining result indicating that the access address in the resource access request does not belong to the at least one accessible address space in the security control information, determining that the requester is not permitted to access the access address; or rejecting the resource access request in response to the second determining result indicating that the requester is not permitted to perform the operation of the operation type identified by the operation type ID on the access address in the resource access request. An error message may be responded to the requester regarding the resource access request, and/or all-zero data may be returned if the operation type identified by the operation type ID is a read operation. If the operation type identified by the operation type ID is a write operation, data that is requested to be written into the access address carried in the resource access request is discarded.

Optionally, in some other implementations, another hardware for implementing permission control may also be disposed in the integrated circuit, which is referred to as a permission control module hereinafter, to implement the embodiments of the method for controlling resource access. In specific applications, the permission control module may be provided at the slave device that serves as the resource party, may be provided at the master device that serves as the requester, or may be independently disposed at any position between the requester and the resource party in the integrated circuit. This is not limited in embodiments of the disclosure.

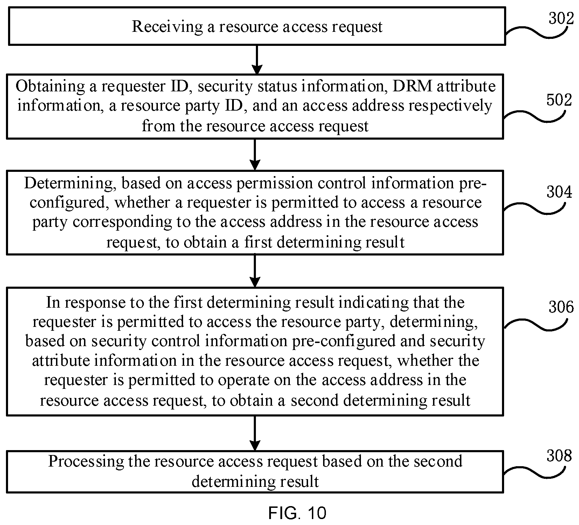

FIG. 10 is a schematic flowchart of a method for controlling resource access according to yet another illustrative embodiment of the disclosure. This embodiment may be applied to a permission control module. As shown in FIG. 10, on the basis of the embodiment shown in FIG. 7, after step 302, this embodiment further includes the following operation.

502: Obtaining the requester ID, the security status information, DRM attribute information, a resource party ID, and the access address respectively from the resource access request.

The resource party ID identifies the resource party requested to be accessed by the resource access request.

Optionally, in some implementations, when the permission control module is provided at the resource party, the access permission control information may include a list of requesters that are permitted to access the resource party. The list of requesters includes at least one master device ID, each of which uniquely identifies a master device that can be used as a requester.

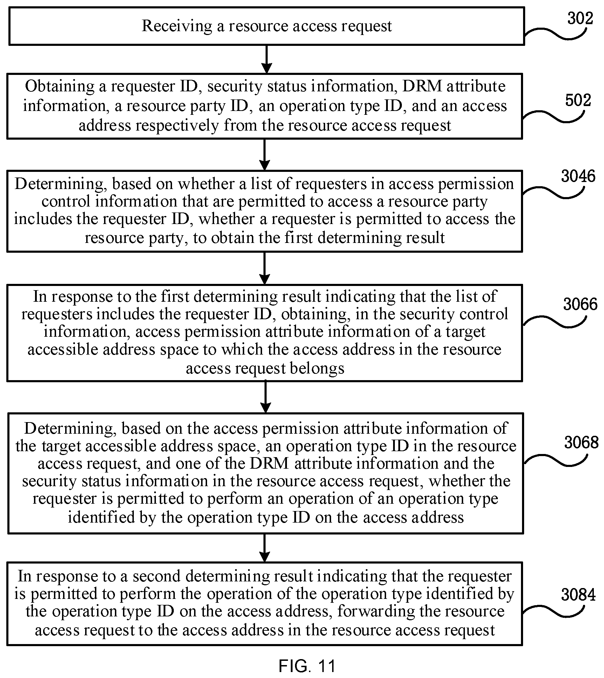

FIG. 11 is a schematic flowchart of a method for controlling resource access according to still yet another illustrative embodiment of the disclosure. This embodiment may be applied to the permission control module provided at the resource party. As shown in FIG. 11, on the basis of the embodiment shown in FIG. 10, operation 502 may further include:
obtaining the operation type ID from the resource access request, where the operation type ID identifies the operation type corresponding to the resource access request.

Accordingly, referring to FIG. 11, in this embodiment, operation 304 may specifically include the following operation.

3046: Determining, based on whether the list of requesters in the access permission control information that are permitted to access the resource party includes the requester ID, whether the requester is permitted to access the resource party, to obtain the first determining result.

In some implementations of this embodiment, the security control information may include access permission attribute information of the at least one accessible address space.

Optionally, in some implementations, according to security requirements of relevant functions and information protection, an access permission attribute of each accessible address space may be determined based on the security attribute information of the resource party corresponding to each accessible address space, or may be further determined in combination with a current status of the corresponding resource party. For details, please refer to the relevant description in the foregoing embodiment, and details are not described herein.

Accordingly, referring to FIG. 11 again, in this embodiment, operation 306 may specifically include the following operations.

3066: In response to the first determining result indicating that the list of requesters includes the requester ID, determine that the requester is permitted to access the resource party, and obtain the access permission attribute information of the target accessible address space to which the access address in the resource access request belongs in the security control information.

The target accessible address space refers to an accessible address space in the security control information that includes the access address in the resource access request.

3068: Determining, based on the access permission attribute information of the target accessible address space, the operation type ID in the resource access request, and one of the DRM attribute information and the security status information in the resource access request, whether the requester is permitted to perform the operation of the operation type identified by the operation type ID on the access address.

Optionally, referring to FIG. 11 again, in some implementations, operation 308 may specifically include the following operation.

3084: In response to the second determining result indicating that the requester is permitted to perform the operation of the operation type identified by the operation type ID on the access address, forwarding the resource access request to the access address in the resource access request to perform the operation requested by the resource access request on the access address.

Optionally, on the basis of the embodiment shown in FIG. 11, operation 308 may further include the following operations:
in response to the first determining result indicating that the list of requesters does not include the requester ID, determining that the requester is not permitted to access the resource party; or rejecting the resource access request in response to the second determining result indicating that the requester is not permitted to perform the operation of the operation type identified by the operation type ID on the access address. An error message may be responded to the requester regarding the resource access request, and/or all-zero data may be returned if the operation type identified by the operation type ID is a read operation. If the operation type identified by the operation type ID is a write operation, data that is requested to be written into the access address carried in the resource access request is discarded.

Optionally, in some implementations, when the permission control module is provided at the requester, the access permission control information may include a list of resource parties that the requester is permitted to access. The list of resource parties may include at least one slave device ID, each of which uniquely identifies a slave device that can be used as a resource party.

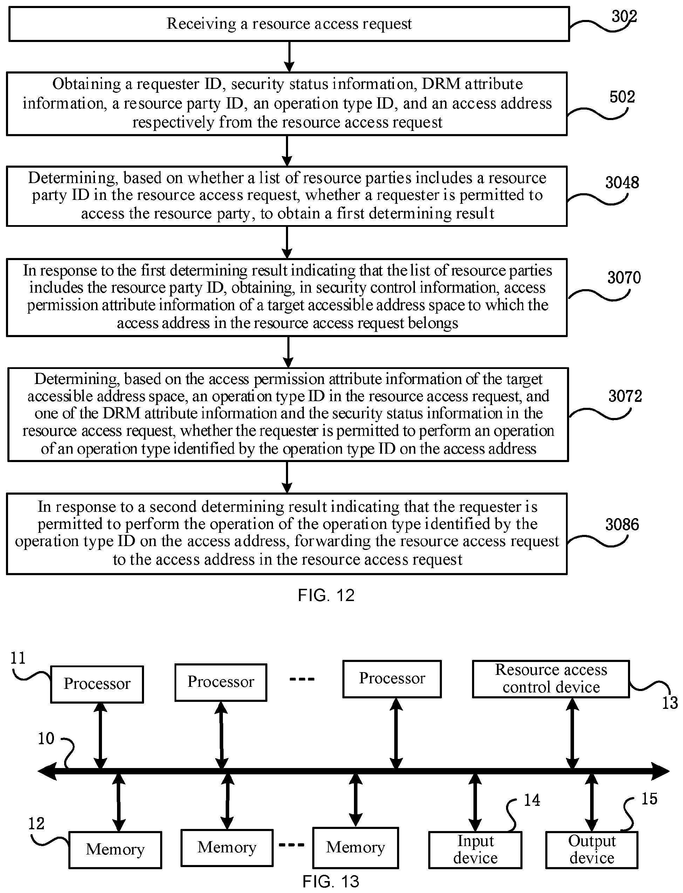

FIG. 12 is a schematic flowchart of a method for controlling resource access according to a further illustrative embodiment of the disclosure. This embodiment may be applied to the permission control module provided at the requester. As shown in FIG. 12, on the basis of the embodiment shown in FIG. 10, operation 502 may further include obtaining the operation type ID from the resource access request. The operation type ID identifies the operation type corresponding to the resource access request.

Accordingly, referring to FIG. 12, in this embodiment, operation 304 may specifically include the following operation.

3048: Determining, based on whether the list of resource parties includes the resource party ID in the resource access request, whether the requester is permitted to access the resource party, to obtain the first determining result.

In some implementations of this embodiment, the security control information may include access permission attribute information of the at least one accessible address space corresponding to each resource party ID in the list of resource parties.

Optionally, in some implementations, according to security requirements of relevant functions and information protection, an access permission attribute of each accessible address space may be determined based on the security attribute information of the resource party corresponding to each accessible address space, or may be further determined in combination with a current status of the corresponding resource party. For details, please refer to the relevant description in the foregoing embodiment, and details are not described herein.

Accordingly, referring to FIG. 12 again, in this embodiment, operation 306 may specifically include the following operations.

3070: In response to the first determining result indicating that the list of resource parties includes the resource party ID, determining that the requester is permitted to access the resource party, and obtaining the access permission attribute information of the target accessible address space to which the access address in the resource access request belongs in the security control information.

The target accessible address space refers to an accessible address space in the security control information that includes the access address in the resource access request.

3072: Determining, based on the access permission attribute information of the target accessible address space, the operation type ID in the resource access request, and one of the DRM attribute information and the security status information in the resource access request, whether the requester is permitted to perform the operation of the operation type identified by the operation type ID on the access address.

Optionally, referring to FIG. 12 again, in some implementations, operation 308 may specifically include the following operation.

3086: In response to the second determining result indicating that the requester is permitted to perform the operation of the operation type identified by the operation type ID on the access address, forwarding the resource access request to the access address in the resource access request to perform the operation requested by the resource access request on the access address.

Optionally, on the basis of the embodiment shown in FIG. 12, operation 308 may further include the following operations:
in response to the first determining result indicating that the list of resource parties does not include the resource party ID in the resource access request, determining that the requester is not permitted to access the resource party; or rejecting the resource access request in response to the second determining result indicating that the requester is not permitted to perform the operation of the operation type identified by the operation type ID on the access address. An error message may be responded to the requester regarding the resource access request, and/or all-zero data may be returned if the operation type identified by the operation type ID is a read operation. If the operation type identified by the operation type ID is a write operation, data that is requested to be written into the access address carried in the resource access request is discarded.

Embodiments of this illustrative method correspond to the embodiments of the illustrative system described above in terms of specific implementation. For relevant content, reference may be made to each other. For beneficial technical effects of this illustrative method, reference may be made to respective beneficial technical effects in the section of illustrative system described above, and details are not described herein again.

### Illustrative device

In addition, an embodiment of the disclosure further provides a vehicle. The vehicle may include an integrated circuit according to the any one embodiment.

In addition, an embodiment of the disclosure further provides an electronic device, including: a processor, a memory, and a resource access control device.

The memory is configured to store processor-executable instructions.

The processor is configured to read the executable instructions from the memory, and execute the instructions to control the resource access control device to implement the method for controlling resource access according to any one of embodiments of the disclosure.

FIG. 13 is a diagram of a structure of an electronic device according to an embodiment of the disclosure. The electronic device includes at least one processor 11, at least one memory 12, and a resource access control device 13 that are connected via a bus 10.

The processor 11 may be a central processing unit (CPU) or another form of processing unit having a data processing capability and/or an instruction execution capability, and may control other components in the electronic device to implement desired functions.

The memory 12 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, a flash memory, etc. One or more computer program instructions may be stored on the computer readable storage medium. One of the processors 11 may execute the one or more program instructions to implement the method for controlling resource access according to the various embodiments of the disclosure that are described above and/or other desired functions.

In an example, the electronic device may further include an input device 14 and an output device 15. These components are connected to each other through a bus system and/or another form of connection mechanism (not shown).

The input device 14 may include, for example, a touch screen, a voice input unit, and a sensor.

The output device 15 may output various information to the outside, and may include, for example, a display, a speaker, a printer, a communication network, and a remote output device connected to the communication network.

Certainly, for simplicity, FIG. 13 shows only some of components in the electronic device that are related to the disclosure, and components such as a bus and an input/output interface are omitted. In addition, according to specific application situations, the electronic device may further include any other appropriate components.

Illustrative computer program product and computer readable storage medium

In addition to the foregoing method and device, embodiments of the disclosure may also provide a computer program product, which includes computer program instructions. When the computer program instructions are run by a processor, the processor is enabled to perform the steps, of the method for controlling resource access according to embodiments of the disclosure, that are described in the "Illustrative method" section described above.

The computer program product may be program code, written with one or any combination of a plurality of programming languages, which is configured to perform the operations in embodiments of the disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, embodiments of the disclosure may further relate to a computer readable storage medium, which stores computer program instructions. When the computer program instructions are run by the processor, the processor is enabled to perform the steps, of the method for controlling resource access according to embodiments of the disclosure, that are described in the "Illustrative method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of the disclosure are described above in combination with specific embodiments. However, advantages, superiorities, and effects mentioned in the disclosure are merely examples but are not for limitation, and it cannot be considered that these advantages, superiorities, and effects are necessary for each embodiment of the disclosure. In addition, specific details described above are merely for examples and for ease of understanding, rather than limitations. The details described above do not limit that the disclosure must be implemented by using the foregoing specific details.

A person skilled in the art may make various modifications and variations to the disclosure without departing from the spirit and the scope of this application. In this way, if these modifications and variations of this application fall within the scope of the claims and equivalent technologies of the claims of the disclosure, the disclosure also intends to include these modifications and variations.

## Claims

1. An integrated circuit, **characterized in that** the integrated circuit comprises: a plurality of hardware modules (202) and a resource access control device (204), wherein the plurality of hardware modules (202) are connected to the resource access control device via a bus (206); at least one hardware module of the plurality of hardware modules is correspondingly allocated to at least one operating system (104); and
the resource access control device (204) is configured to:
receive a resource access request sent by a requester, the resource access request comprising a requester identifier, security attribute information, and an access address, wherein the requester identifier identifies the requester initiating the resource access request, the requester is one of the at least one hardware module, and the requester is allocated to a corresponding operating system,
determine, based on access permission control information pre-configured, whether the requester is permitted to access a resource party corresponding to the access address, to obtain a first determining result, wherein the resource party is a hardware module of the plurality of hardware modules other than the at least one hardware module;
in response to the first determining result indicating that the requester is permitted to access the resource party, determine, based on security control information pre-configured and the security attribute information, whether the requester is permitted to operate on the access address, to obtain a second determining result; and
process the resource access request based on the second determining result.

2. The integrated circuit according to claim 1, further comprising:
a configuration register (208), configured to configure security attribute information for the at least one hardware module.

3. The integrated circuit according to any one of claims 1 and 2, wherein the security attribute information comprises at least one of security status information and data rights management attribute information; the security status information represents a security attribute of the requester; and the data rights management attribute information represents a data rights management attribute of the requester.

4. The integrated circuit according to claim 3, wherein the resource access control device comprises at least one of a system memory management unit and a permission control module.

5. The integrated circuit according to claim 4, wherein when the resource access control device (204) comprises the system memory management unit (2042), the resource access request comprises a stream identifier, the security status information, and the access address; the stream identifier comprises the requester identifier and the data rights management attribute information that are in a preset format; and
the system memory management unit (2042) is further configured to: obtain the stream identifier, the security status information, and the access address respectively from the resource access request; and obtain the requester identifier and the data rights management attribute information from the stream identifier based on the preset format.

6. The integrated circuit according to claim 5, wherein the system memory management unit (2042) is further configured to:
obtain an operation type identifier from the resource access request, wherein the operation type identifier identifies an operation type corresponding to the resource access request;
obtain a first page table corresponding to the requester identifier, wherein the first page table is a page table that the requester is permitted to access, and the first page table comprises at least one accessible address space corresponding to at least one resource party and access permission attribute information of the at least one accessible address space;
determine, based on whether the access address belongs to the at least one accessible address space, whether the requester is permitted to access the resource party, to obtain the first determining result;
in response to the first determining result indicating that the access address belongs to at least one accessible address space in the security control information, determine that the requester is permitted to access the access address, and obtain, from the security control information, access permission attribute information of a target accessible address space to which the access address belongs, wherein the security control information comprises access permission attribute information of the at least one accessible address space;
determine, based on the access permission attribute information of the target accessible address space, the operation type identifier, and one of the data rights management attribute information and the security status information, whether the requester is permitted to perform an operation of the operation type identified by the operation type identifier on the access address, to obtain the second determining result; and
in response to the second determining result indicating that the requester is permitted to perform the operation of the operation type identified by the operation type identifier on the access address, convert the access address from a virtual address to a physical address based on the first page table, and forward the resource access request to the physical address to perform an operation requested by the resource access request on the physical address.

7. The integrated circuit according to claim 4, wherein in case the resource access control device (204) comprises the permission control module (2044), and the permission control module (2044) is provided at the resource party, the permission control module (2044) is further configured to:
obtain the requester identifier, the security status information, the data rights management attribute information, a resource party identifier, an operation type identifier, and the access address respectively from the resource access request, wherein the resource party identifier identifies the resource party requested to be accessed by the resource access request, and the operation type identifier identifies an operation type corresponding to the resource access request;
determine, based on whether a list of requesters in the access permission control information that are permitted to access the resource party comprises the requester identifier, whether the requester is permitted to access the resource party, to obtain the first determining result;
in response to the first determining result indicating that the list of requesters comprises the requester identifier, determine that the requester is permitted to access the resource party, and obtain, from the security control information, access permission attribute information of a target accessible address space to which the access address belongs, wherein the security control information comprises access permission attribute information of at least one accessible address space;
determine, based on the access permission attribute information of the target accessible address space, the operation type identifier, and one of the data rights management attribute information and the security status information, whether the requester is permitted to perform an operation of the operation type identified by the operation type identifier on the access address, to obtain the second determining result; and
in response to the second determining result indicating that the requester is permitted to perform the operation of the operation type identified by the operation type identifier on the access address, forward the resource access request to the access address to perform an operation requested by the resource access request on the access address.

8. The integrated circuit according to claim 4, wherein the resource access control device (204) comprises a permission control module (2044), and when the permission control module (2044) is provided at the requester, the permission control module (2044) is further configured to:
obtain the requester identifier, the security status information, the data rights management attribute information, a resource party identifier, an operation type identifier, and the access address respectively from the resource access request, wherein the resource party identifier identifies the resource party requested to be accessed by the resource access request, and the operation type identifier identifies an operation type corresponding to the resource access request;
determine, based on whether a list of resource parties comprises the resource party identifier, whether the requester is permitted to access the resource party, to obtain the first determining result;
in response to the first determining result indicating that the list of resource parties comprises the resource party identifier, determine that the requester is permitted to access the resource party, and obtain, from the security control information, access permission attribute information of a target accessible address space to which the access address belongs, wherein the security control information comprises access permission attribute information of at least one accessible address space corresponding to each resource party identifier in the list of resource parties;
determine, based on the access permission attribute information of the target accessible address space, the operation type identifier, and one of the data rights management attribute information and the security status information, whether the requester is permitted to perform an operation of the operation type identified by the operation type identifier on the access address, to obtain the second determining result; and
in response to the second determining result indicating that the requester is permitted to perform the operation of the operation type identified by the operation type identifier on the access address, forward the resource access request to the access address to perform an operation requested by the resource access request on the access address.

9. A method for controlling resource access, **characterized in that** the method comprises:
receiving (302) a resource access request, the resource access request comprising a requester identifier, security attribute information, and an access address, wherein the requester identifier identifies a requester initiating the resource access request, and the requester is allocated to a corresponding operating system;
determining (304), based on access permission control information pre-configured, whether the requester is permitted to access a resource party corresponding to the access address, to obtain a first determining result;
in response to the first determining result indicating that the requester is permitted to access the resource party, determining (306), based on security control information pre-configured and the security attribute information, whether the requester is permitted to operate on the access address, to obtain a second determining result; and
processing (308) the resource access request based on the second determining result.

10. The method according to claim 9, wherein the security attribute information comprises at least one of security status information and data rights management attribute information; the security status information represents a security attribute of the requester; and the data rights management attribute information represents a data rights management attribute of the requester.

11. The method according to claim 10, further comprising: after receiving (302) the resource access request,
obtaining (402) a stream identifier, the security status information, and the access address respectively from the resource access request, wherein the stream identifier comprises the requester identifier and the data rights management attribute information that are in a preset format; and
obtaining (404) the requester identifier and the data rights management attribute information from the stream identifier based on the preset format.

12. The method according to claim 11, further comprising: after receiving (302) the resource access request, obtaining an operation type identifier from the resource access request, wherein the operation type identifier identifies an operation type corresponding to the resource access request,
wherein determining (304), based on the access permission control information pre-configured, whether the requester is permitted to access the access address, to obtain the first determining result comprises:
obtaining (3042) a first page table corresponding to the requester identifier, wherein the first page table is a page table that the requester is permitted to access, and the first page comprises at least one accessible address space corresponding to at least one resource party and access permission attribute information of each accessible address space of the at least one accessible address space; and
determining (3044), based on whether the access address belongs to the at least one accessible address space, whether the requester is permitted to access the resource party, to obtain the first determining result,
wherein the in response to the first determining result indicating that the requester is permitted to access the resource party, determining (306), based on the security control information pre-configured and the security attribute information, whether the requester is permitted to operate on the access address comprises:
in response to the first determining result indicating that the access address belongs to at least one accessible address space in the security control information, determining that the requester is permitted to access the access address, and obtaining (3062), in the security control information, access permission attribute information of a target accessible address space to which the access address belongs, wherein the security control information comprises access permission attribute information of the at least one accessible address space; and
determining (3064), based on the access permission attribute information of the target accessible address space, the operation type identifier, and one of the data rights management attribute information and the security status information, whether the requester is permitted to perform an operation of the operation type identified by the operation type identifier on the access address.

13. The method according to any one of claims 11 and 12, wherein the processing (308) the resource access request based on the second determining result comprises:
in response to the second determining result indicating that the requester is permitted to perform the operation of the operation type identified by the operation type identifier on the access address, converting (3082) the access address from a virtual address to a physical address based on the first page table, and forwarding the resource access request to the physical address to perform an operation requested by the resource access request at the physical address.

14. The method according to claim 10, further comprising: after receiving (302) the resource access request,
obtaining (502) the requester identifier, the security status information, the data rights management attribute information, a resource party identifier, and the access address respectively from the resource access request, wherein the resource party identifier identifies the resource party requested to be accessed by the resource access request.

15. An electronic device, **characterized in that** the electronic device comprises: a processor (11), a memory (12), and a resource access control device (13), wherein
the memory (12) is configured to store processor-executable instructions; and
the processor (11) is configured to read the executable instructions from the memory, and execute the instructions to control the resource access control device to implement the method according to any one of claims 9 to 14.
